# FASCICULE DE BREVET EUROPEEN

(11) **EP 4 091 938 B1**
(45) Date de publication et mention de la délivrance du brevet: **13.12.2023**
(21) Numéro de dépôt: 22169155.3
(22) Date de dépôt: 21.04.2022
(51) Int. Cl.: B64C 27/68, B64C 27/605, B64C 13/00, B64C 27/00

(54) **SERVOCOMMANDE ÉLECTROMÉCANIQUE, SYSTÈME À PLATEAU CYCLIQUE AYANT AU MOINS QUATRE SERVOCOMMANDES ÉLECTROMÉCANIQUES ET GIRAVION**
ELEKTROMECHANISCHE SERVOSTEUERUNG, TAUMELSCHEIBENSYSTEM MIT MINDESTENS VIER ELEKTROMECHANISCHEN SERVOSTEUERUNGEN UND DREHFLÜGELFLUGZEUG
ELECTROMECHANICAL SERVO CONTROL SYSTEM WITH SWASH PLATE HAVING AT LEAST FOUR ELECTROMECHANICAL SERVO CONTROLS AND ROTORCRAFT

(30) Priorité: 21.05.2021 FR 2105319
(43) Date de publication de la demande: 23.11.2022
(73) Titulaire: Airbus Helicopters, 13725 Marignane Cedex (FR)
(72) Inventeur: RUET, Laurent, 13100 AIX EN PROVENCE (FR)
(74) Mandataire: GPI Brevets

(56) Documents cités:
- EP-A2- 1 927 543
- US-A1- 2010 084 517
- US-A1- 2010 150 719
- US-A1- 2013 119 187
- US-A1- 2020 290 729

## Description

La présente invention concerne une servocommande électromécanique, un système à plateau cyclique ayant au moins quatre servocommandes électromécaniques et un giravion.

Un giravion comporte au moins une voilure tournante. Cette voilure tournante comporte un rotor muni d'une pluralité de pales. Le giravion peut comprendre un système à plateau cyclique pour modifier cycliquement et collectivement le pas des pales du rotor.

Un tel système à plateau cyclique peut comprendre un plateau oscillant relié par un mécanisme à chaque pale du rotor. Le plateau oscillant est mobile en translation selon un premier axe pour modifier collectivement le pas des pales du rotor et peut osciller autour d'un deuxième axe et d'un troisième axe pour modifier cycliquement le pas des pales, à savoir en fonction de l'azimut de chaque pale au regard de l'axe de rotation du rotor.

Selon une réalisation connue, le plateau oscillant est un plateau non tournant au regard de l'axe de rotation du rotor. Le plateau oscillant coopère alors avec un plateau tournant du mécanisme. Le plateau tournant est alors relié aux pales par des biellettes respectives. Le plateau non tournant peut être porté par une rotule coulissant sur un tube de guidage. Le plateau tournant est relié au plateau non tournant par un roulement conférant uniquement un degré de liberté en rotation au plateau tournant par rapport au plateau non tournant. Le plateau non tournant ainsi que le plateau tournant et la rotule sont conjointement mobiles en translation pour modifier collectivement le pas de pales. De plus, le plateau tournant et le plateau non tournant sont conjointement inclinables par rapport à la rotule pour modifier cycliquement le pas des pales. Indépendamment de la manière de relier le plateau oscillant aux pales du rotor, un système à plateau cyclique peut comporter au moins trois servocommandes articulées au plateau oscillant pour le déplacer.

Les servocommandes peuvent comprendre des vérins hydrauliques linéaires, à savoir qui s'étendent ou se rétractent sur commande d'un distributeur hydraulique. Par sécurité, les servocommandes peuvent comporter au moins deux corps hydrauliques coopérant avec une même tige de puissance au sein d'un système à corps fixes ou une même tige d'ancrage au sein d'un système à corps mobiles.

Alternativement, les servocommandes peuvent être électromécaniques en comprenant au moins un vérin électromécanique. De telles servocommandes électromécaniques sont de fait intéressantes en ne nécessitant pas la mise en place d'un système hydraulique, mais sont exposées à un risque de grippage. Par sécurité, chaque servocommande peut comprendre deux vérins électriques linéaires agencés en parallèle ou en série. Cette solution est intéressante, mais présente de fait au moins six vérins électriques ce qui a un impact sur l'encombrement du système et sa masse.

De plus, une servocommande ayant deux vérins électriques en série présente une longueur rendant difficile son agencement, notamment en lieu et place d'une servocommande hydraulique existante. En outre, les pièces liant les vérins électriques entre eux ainsi qu'à un support et au plateau oscillant sont toutes critiques au sein d'un système à trois servocommandes.

Une servocommande ayant deux vérins électriques en parallèle présente une largeur importante. De plus, une telle servocommande nécessite un mécanisme particulier pour lier ses vérins électriques au plateau oscillant. Ce mécanisme est aussi susceptible de subir un grippage.

Par suite, chaque servocommande électromécanique ou hydraulique peut comprendre au moins deux sous-ensembles actifs, à savoir au moins deux corps hydrauliques ou deux vérins électriques afin d'avoir son propre système de secours.

Le brevet FR 2 438 586 décrit un système ayant au moins quatre servocommandes ayant chacune une pompe hydraulique associée à vérin hydraulique. Trois servocommandes sont utilisées à un instant donné, la ou les autres servocommandes étant considérées comme des servocommandes de secours passives pouvant devenir actives en cas de défaillance de l'une des servocommandes utilisées.

Le document FR 2684953 décrit un système muni de quatre servocommandes hydrauliques. Chaque servocommande a un vérin de puissance, un système d'ancrage et un servodistributeur. Trois servodistributeurs sont actifs et un servodistributeur est passif dans un mode de fonctionnement normal.

Le document US 2020/290729 A1 présente un système linéaire électromécanique muni de deux connecteurs, d'une tige et d'au moins un actionneur configuré pour faire varier une distance entre les connecteurs.

Le document EP 1 927 543 A2 décrit une servocommande linéaire électromécanique comprenant un écrou cylindrique en communication filetée avec une tige de sortie.

Le document US 2013/119187 A1 décrit un système muni de servocommandes électriques articulées à un plateau d'un ensemble de plateaux cycliques.

Le document US 2010/150719 A1 présente un système qui comporte un moyeu portant des pales et un actionneur électrique par pale disposé dans le moyeu. L'actionneur comporte un logement monté sur le moyeu et logeant partiellement un arbre de sortie linéaire.

Le document US 2010/084517 A1 décrit un système qui comprend trois ensembles d'actionnement électromécaniques agencés sous une périphérie d'un plateau cyclique. Chaque ensemble d'actionnement comprend trois actionneurs linéaires ainsi qu'une plaque de sommation et une tige de plateau oscillant.

La présente invention a alors pour objet de proposer une servocommande électromécanique afin d'obtenir un système à plateau cyclique innovant pour commander le pas des pales d'un rotor, ce système ayant un nombre restreint de servocommandes pour atteindre une masse et un coût optimisés.

L'invention vise ainsi une servocommande linéaire électromécanique comportant une tige de puissance mobile en translation, la servocommande étant notamment apte à être liée à un plateau oscillant.

De plus, la servocommande comporte un unique vérin électrique linéaire muni d'au moins un moteur électrique relié par une liaison mécanique à la tige de puissance, la servocommande comprenant un ancrage solidaire du vérin électrique, ledit au moins un moteur électrique étant commandé par un calculateur, ledit ancrage ayant une tige d'ancrage mobile en translation par rapport à un corps de la servocommande, la tige d'ancrage étant apte à être articulée à un support immobile ou à un plateau mobile, ledit ancrage ayant au moins un frein d'ancrage qui est configuré pour immobiliser la tige d'ancrage par rapport au vérin électrique dans un mode de fonctionnement normal et rendre transparente la servocommande en autorisant le déplacement du vérin électrique par rapport à la tige d'ancrage dans un mode de fonctionnement sécurisé sur requête du calculateur.

De fait, la tige d'ancrage est indépendante et distincte de la tige de puissance.

Une telle servocommande peut ainsi être rendue passive et transparente en cas de défaillance. Le terme « passive » signifie que la servocommande n'a pas d'influence et le terme « transparent » signifie que la servocommande permet de plus un déplacement libre de l'objet piloté. Une telle servocommande peut en outre rendre un système à plateau cyclique fiable et robuste non pas en doublant les servocommandes, mais de manière globale.

Dans le mode de fonctionnement normal, chaque ancrage est figé. Le vérin électrique peut s'étendre ou se rétracter pour déplacer un objet, par exemple pour déplacer un plateau oscillant.

Dans le mode de fonctionnement sécurisé, le vérin électrique peut se déplacer par rapport à la tige d'ancrage sous la pression de l'objet. La servocommande suit alors les mouvements de l'objet.

La servocommande peut de plus comporter une ou plusieurs des caractéristiques qui suivent, prises seules ou en combinaison.

Selon une possibilité, ledit vérin électrique de la servocommande peut comporter plusieurs moteurs électriques coopérant avec un même arbre de vérin de la liaison mécanique.

Le vérin électrique peut alors comprendre plusieurs moteurs électriques montés sur le même arbre pour satisfaire une exigence de disponibilité.

Le ou les moteurs peuvent chacun comprendre un stator entourant une partie tournante et rendant mobile sur requête la partie tournante par rapport au stator de manière usuelle.

Selon une possibilité compatible avec la précédente, la liaison mécanique de la servocommande peut comporter un arbre de vérin solidaire d'une partie tournante dudit au moins un moteur électrique, ladite liaison mécanique comportant un convertisseur de vérin relié audit arbre de vérin et à ladite tige de puissance et configuré pour convertir un mouvement rotatif de l'arbre de vérin en un mouvement translatif de ladite tige de puissance et inversement.

Par exemple, le convertisseur de vérin peut comprendre une vis à billes, une vis à rouleaux, un élément d'un système vis-écrou.

Eventuellement, la liaison mécanique voire le convertisseur de vérin peut comprendre un système de réduction de vitesse. Par exemple, un engrenage épicycloïdal est agencé entre une vis à billes et l'arbre de vérin.

Le convertisseur de vérin est un convertisseur rotatif/translatif permettant de lier le ou les moteurs rotatifs à une tige de puissance mobile en translation par rapport au corps de la servocommande. Si le ou les moteurs sont rendus inopérants dans un mode inactif du mode de fonctionnement normal, la partie tournante peut être mise en rotation par la translation de la tige de puissance par rapport au corps de la servocommande sous la pression de l'objet piloté par la servocommande. La servocommande suit alors les mouvements de l'objet, un plateau oscillant par exemple.

En cas de grippage du vérin électrique, la tige d'ancrage peut être libérée par le frein d'ancrage pour que la servocommande suive les mouvements de l'objet, et donc du plateau oscillant éventuel.

Eventuellement, ledit arbre de vérin comporte un filetage coopérant avec le convertisseur de vérin, par exemple un écrou, une vis à billes ou autres.

Selon une possibilité compatible avec les précédentes, ledit ancrage peut comporter un arbre d'ancrage mobile en rotation par rapport à un portant solidaire du vérin électrique, ledit ancrage comportant un convertisseur d'ancrage réversible relié audit arbre d'ancrage et à ladite tige d'ancrage et configuré pour qu'un mouvement translatif de l'arbre d'ancrage par rapport à la tige d'ancrage induise un mouvement rotatif de l'arbre d'ancrage et inversement, ledit frein d'ancrage étant configuré pour immobiliser ledit arbre d'ancrage par rapport à la tige d'ancrage dans le mode de fonctionnement normal et pour libérer ledit arbre d'ancrage dans le mode de fonctionnement sécurisé.

Lorsque le frein d'ancrage bloque l'arbre d'ancrage, le corps du vérin électrique est alors immobile par rapport à la tige d'ancrage.

Par contre, lorsque le frein d'ancrage ne bloque plus l'arbre d'ancrage, l'arbre d'ancrage est libre en rotation. Le corps du vérin électrique peut ainsi se déplacer en translation par rapport à la tige d'ancrage, l'arbre d'ancrage effectuant alors une rotation sur lui-même.

Le convertisseur d'ancrage peut comprendre, une vis à billes ou à rouleaux, un système vis-écrou ou autres.

Eventuellement, le convertisseur d'ancrage peut comprendre un système de réduction de vitesse. Par exemple, un engrenage épicycloïdal est agencé entre une vis à billes et l'arbre d'ancrage.

Le frein d'ancrage peut alors s'avérer simple en comprenant au moins un patin rendu mobile par un actionneur pour appuyer sur requête sur une face de l'arbre d'ancrage. Par exemple, un tel frein peut comprendre un ressort tendant à éloigner un patin d'une face de l'arbre d'ancrage et un électroaimant tendant à attirer ledit patin en étirant ledit ressort lorsque l'électroaimant est alimenté électriquement.

Alternativement, ledit ancrage peut comporter un arbre d'ancrage solidaire du vérin électrique et mobile en translation par rapport à la tige d'ancrage, ledit frein d'ancrage étant configuré pour lier ledit arbre d'ancrage et ladite tige d'ancrage dans le mode de fonctionnement normal et pour désolidariser ledit arbre d'ancrage et ladite tige d'ancrage dans le mode de fonctionnement sécurisé.

Le fonctionnement est identique à la version précédente. Toutefois, l'arbre d'ancrage est selon cette possibilité mobile en translation.

Selon une possibilité compatible avec les précédentes, ledit vérin électrique d'une servocommande peut comporter un frein de vérin coopérant avec ladite tige de puissance ou un arbre de vérin lié à la tige de puissance par un convertisseur de vérin.

Un tel frein de vérin peut être sollicité en cas de dysfonctionnement, par exemple en cas de panne d'au moins un moteur électrique, pour freiner la tige de puissance ou l'arbre de vérin éventuel.

Le frein de vérin peut être un frein par manque de courant, contrairement au frein d'ancrage par exemple.

Selon une possibilité compatible avec les précédentes, ledit calculateur peut être configuré pour piloter ledit au moins un moteur électrique dans un mode actif dudit mode de fonctionnement normal et pour inhiber ledit au moins un moteur électrique dans un mode inactif dudit mode de fonctionnement normal.

Ainsi, en cas de dysfonctionnent de la servocommande, le calculateur peut simplement rendre inactif le ou les moteurs, par exemple en coupant une ligne d'alimentation électrique alimentant électriquement le ou les moteurs ou ne transmettant plus de signaux de commande au ou aux moteurs. Notamment en présence d'un convertisseur de vérin, la servocommande est alors passive et transparente. En présence d'un grippage, la servocommande est placée dans le mode de fonctionnement sécurisé.

Ainsi, deux dispositifs distincts permettent de rendre passive et transparent une servocommande.

Selon une possibilité compatible avec les précédentes, ladite servocommande pouvant fonctionner selon plusieurs configurations, lesdites configurations dépendants d'un mode de fonctionnement courant de la servocommande, ledit mode de fonctionnement courant pouvant être un mode correspondant au mode de fonctionnement normal ou sécurisé, ledit calculateur peut comporter un modèle de pilotage par configuration possible pour commander la servocommande en fonction d'au moins un signal de pilotage reçu.

Le calculateur reçoit au moins un signal de pilotage transmis par un contrôleur, le contrôleur pouvant comprendre une interface de pilotage commandée par un humain et/ou un pilote automatique. Pour chaque configuration possible, le calculateur comporte un modèle fournissant des signaux à transmettre à la servocommande en fonction du ou des signaux de pilotage.

Selon une possibilité compatible avec les précédentes, la servocommande peut comporter au moins un senseur de fonctionnement de vérin, coopérant avec ladite tige de puissance et/ou un moteur et/ou l'arbre de vérin, ledit senseur de fonctionnement de vérin transmettant au calculateur un signal de fonctionnement de vérin porteur d'une information de mouvement de ladite tige de puissance par rapport à un corps de la servocommande.

Selon un exemple, le senseur de fonctionnement de vérin peut comprendre un capteur de courant apte à détecter une surconsommation de courant électrique. Une surconsommation de courant électrique peut signifier que le ou les moteurs n'arrivent à déplacer la tige de puissance.

Selon un exemple, le senseur de fonctionnement de vérin peut comprendre un capteur rotatif placé sur l'arbre de vérin. Si la tige de puissance ne peut pas translater, l'arbre de vérin ne peut pas tourner. Le ou les moteurs peuvent comprendre un capteur rotatif intégré par exemple.

Selon un autre exemple, un senseur de fonctionnement de vérin peut comprendre un capteur de position, de vitesse ou d'accélération placé sur la tige de puissance par exemple. Par exemple, le senseur de fonctionnement de vérin peut comporter un capteur linéaire comprenant une tige de mesure attachée à la tige de puissance et une unité de mesure solidaire d'un corps de la servocommande, par exemple un corps du vérin électrique. Si le calculateur transmet un ordre à un moteur électrique pour déplacer une tige de puissance et si le senseur de fonctionnement de vérin transmet un signal qui ne varie pas, le calculateur en déduit un dysfonctionnement du moteur électrique et peut inhiber le ou les moteurs de la servocommande.

Selon une possibilité compatible avec les précédentes, chaque servocommande peut comporter au moins un senseur de fonctionnement d'ancrage, coopérant avec ladite tige d'ancrage et/ou l'arbre d'ancrage éventuel, ledit senseur de fonctionnement d'ancrage transmettant au calculateur un signal de fonctionnement d'ancrage porteur d'une information de mouvement de ladite tige d'ancrage par rapport à un corps de la servocommande.

Un senseur de fonctionnement d'ancrage peut comprendre un capteur rotatif placé sur l'arbre d'ancrage ou un capteur de position, de vitesse ou d'accélération placé sur la tige d'ancrage par exemple.

Dans le mode de fonctionnement sécurisé, le calculateur peut être configuré pour déterminer à l'aide du signal de fonctionnement d'ancrage que l'ancrage est grippé.

Les cas échéant, le calculateur peut communiquer avec un alerteur pour générer une alerte visuelle, sonore ou tactile lorsqu'un dysfonctionnement ou un grippage est détecté.

Par ailleurs, un système à plateau cyclique peut comprendre au moins quatre servocommandes électromécaniques selon l'invention articulées chacune à un support et à un plateau oscillant de commande du pas de pales d'un rotor.

Les moteurs électriques desdites servocommandes sont commandés par un calculateur commun, ledit ancrage de chaque servocommande ayant une dite tige d'ancrage articulée au support ou au plateau oscillant.

En effet, le système à plateau cyclique comporte au moins quatre servocommandes électromécaniques ayant chacune un vérin électrique, et éventuellement uniquement quatre servocommandes électromécaniques. Quatre servocommandes peuvent être suffisantes pour obtenir un système robuste à la panne.

Dans le mode de fonctionnement normal, chaque ancrage est figé. Le vérin électrique peut s'étendre ou se rétracter pour déplacer le plateau oscillant.

Dans le mode de fonctionnement sécurisé, le vérin électrique peut se déplacer par rapport à la tige d'ancrage sous la pression du plateau oscillant. La servocommande suit alors les mouvements du plateau oscillant.

Ainsi, dans des conditions normales, au moins trois voire toutes les servocommandes sont pilotées par le calculateur pour s'étendre ou se rétracter, ces servocommandes se trouvant alors dans un mode actif du mode de fonctionnement normal. En cas de dysfonctionnement ou de grippage, la servocommande concernée est inhibée soit en n'étant plus pilotée durant un mode inactif du mode de fonctionnement normal soit en étant rendue passive et transparent en libérant son ancrage et en passant dans le mode de fonctionnement sécurisé. Dans ces cas, au moins trois servocommandes restent cependant fonctionnelles et permettent de piloter les pales du rotor.

Ainsi, le système de plateau cyclique devient dans son ensemble robuste suite à une panne d'une servocommande, contrairement à un système rendant chaque servocommande robuste en multipliant les vérins de cette servocommande.

En outre, les pièces constitutives des servocommandes ne représentent pas des pièces critiques puisqu'en cas de rupture d'une servocommande, le système conserve au moins trois servocommandes fonctionnelles.

Selon un autre aspect, un tel système peut être aisément vérifié avant son utilisation. Sur ordre d'un opérateur, la servocommande testée peut être placée dans le mode de fonctionnement sécurisé par le calculateur. Les autres servocommandes sont pilotées pour rester immobiles et maintenir le plateau oscillant dans la position de test. Dès lors, le calculateur peut piloter le vérin électrique de la servocommande testée pour l'étendre sur toute sa course. Le plateau oscillant étant bloqué, le vérin électrique de la servocommande testée doit alors se déplacer par rapport à sa tige d'ancrage. Dans le cas contraire, la servocommande est défectueuse. Par sécurité, une telle opération peut être réalisée plusieurs fois pour chaque servocommande.

Ledit système pouvant fonctionner selon plusieurs configurations, lesdites configurations dépendant d'un mode de fonctionnement courant de chaque servocommande, ledit mode de fonctionnement courant pouvant être un mode correspondant au mode de fonctionnement normal ou sécurisé, ledit calculateur peut comporter un modèle de pilotage par configuration possible pour commander lesdites servocommandes en fonction d'au moins un signal de pilotage reçu.

Le calculateur reçoit au moins un signal de pilotage transmis par un contrôleur, le contrôleur pouvant comprendre une interface de pilotage commandée par un humain et/ou un pilote automatique. Pour chaque configuration possible, le calculateur comporte un modèle fournissant des signaux à transmettre respectivement aux servocommandes en fonction du ou des signaux de pilotage.

Le calculateur choisit le modèle à utiliser en fonction de la ou des servocommandes rendues inopérantes, par défaut ou suite à un dysfonctionnement, le calculateur pilotant différemment les servocommandes en fonction du modèle appliqué pour atteindre le résultat recherché.

Par ailleurs, un giravion peut être muni d'un rotor comprenant plusieurs pales, ledit giravion pouvant comprendre un système à plateau cyclique selon l'invention ayant au moins quatre servocommandes électromécaniques articulées à un plateau oscillant relié par un mécanisme à chaque pale.

L'invention et ses avantages apparaîtront avec plus de détails dans le cadre de la description qui suit avec des exemples donnés à titre illustratif en référence aux figures annexées qui représentent :
la figure 1, un schéma en coupe illustrant une servocommande selon l'invention,
la figure 2, un schéma illustrant un ancrage ayant un arbre d'ancrage mobile en translation,
la figure 3, un schéma illustrant un véhicule muni d'un système à plateau cyclique selon l'invention,
la figure 4, un schéma illustrant le fonctionnement d'un système à plateau cyclique selon l'invention,
la figure 5, un schéma illustrant le fonctionnement d'un système à plateau cyclique selon l'invention, et
la figure 6, un schéma illustrant le fonctionnement d'un système à plateau cyclique selon l'invention.

Les éléments présents dans plusieurs figures distinctes sont affectés d'une seule et même référence.

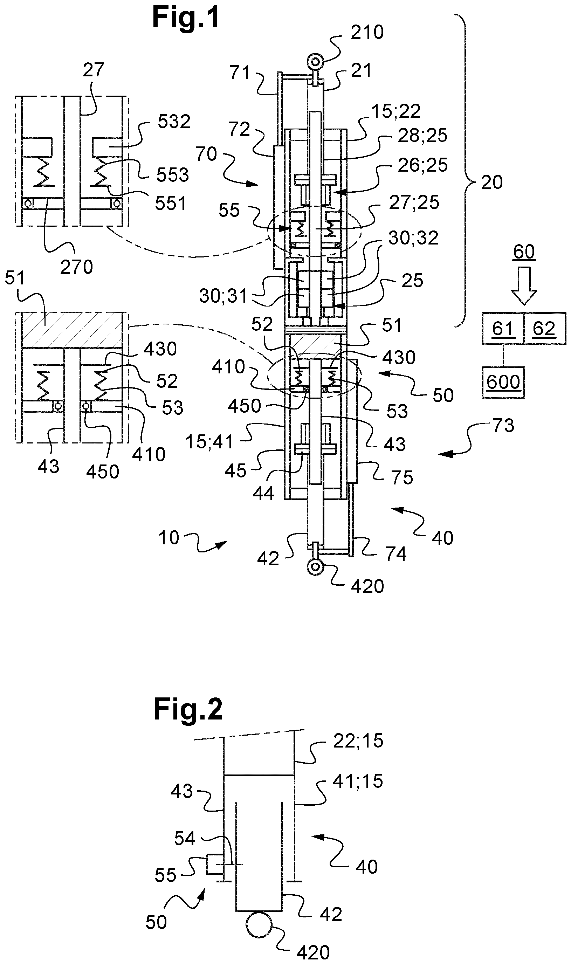

La figure 1 illustre un exemple de servocommande 10 selon l'invention. La servocommande 10 peut être agencée au sein d'un système à plateau oscillant ou d'autres types de systèmes mécaniques pour déplacer un objet, au moins une servocommande pouvant être rendue passive sur commande. Le terme « passive » signifie que la servocommande n'a pas d'influence sur le mouvement de l'objet, aux frottements près.

Indépendamment de son agencement, la servocommande 10 est une servocommande linéaire électromécanique.

A cet effet, la servocommande 10 comporte une tige de puissance 21 qui est mobile en translation par rapport au corps 15 de la servocommande 10 selon un axe longitudinal. La tige de puissance 21 peut comprendre une attache 210 pour être articulée à l'élément à déplacer ou à un support immobile. Pour étendre ou rétracter la tige de puissance 21, la servocommande 10 comporte un unique vérin électrique 20.

Ce vérin électrique 20 comprend un corps de vérin 22. Ce corps de vérin 22 est une partie constituante d'un corps 15 de la servocommande 10. De plus, le vérin électrique 20 comporte au moins un moteur électrique 30, par exemple logé dans le corps de vérin 22. Le ou les moteurs électriques 30 peuvent être des moteurs translatifs ou rotatifs reliés à la tige de puissance 21 par une liaison mécanique 25.

Par exemple, le ou les moteurs 30 comportent un stator 32 solidaire du corps de vérin 22 et une partie tournante 31 logée au moins en partie dans le stator 32. De manière usuelle, le ou les moteurs électriques 30 peuvent comprendre des bobines électriques commandées par une électronique de puissance et des aimants permanents. Le ou les moteurs 30 peuvent être de type moteur synchrone. Par exemple, le stator 32 comporte des bobines et la partie tournante 31 comporte des aimants permanents.

Le ou les moteurs peuvent comprendre un capteur rotatif intégré mesurant une rotation de la partie tournante 31.

Par ailleurs, la liaison mécanique 25 peut comprendre un arbre de vérin 27 en prise avec le ou les moteurs 30. L'arbre de vérin 27 peut s'étendre entièrement dans le corps de vérin 22, la tige de puissance 21 pouvant s'étendre en partie dans le corps de vérin 22. Alternativement, l'arbre de vérin 27 peut s'étendre partiellement dans le corps de vérin 22. Le cas échéant, l'arbre de vérin 27 peut être solidaire de la ou des parties tournantes 31 du ou des moteurs 30.

Outre un arbre de vérin 27, la liaison mécanique 25 peut comporter un convertisseur de vérin 26 relié à l'arbre de vérin 27 et à la tige de puissance 21. En présence d'un ou de moteurs 30 rotatifs mettant en rotation l'arbre de vérin 27, le convertisseur de vérin 26 convertit un mouvement rotatif de l'arbre de vérin 27 autour de l'axe longitudinal en un mouvement translatif de la tige de puissance 21 selon l'axe longitudinal et inversement.

A cet effet, l'arbre de vérin 27 peut comporter un filetage 28 coopérant avec le convertisseur de vérin 26 porté par la tige de puissance 21.

Le convertisseur de vérin 26 peut comporter une vis à billes ou un équivalent, un écrou solidaire de la tige de puissance ou autre, voire peut comporter un système de réduction de vitesse...

Indépendamment de ces caractéristiques, le ou les moteurs 30 peuvent être reliés à un calculateur 60 par une liaison filaire ou non filaire.

Le calculateur 60 peut comprendre par exemple au moins un processeur 61 et au moins une mémoire 62, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le calculateur 60 peut être relié à un contrôleur 600. Le contrôleur 600 émet au moins un signal de pilotage vers le calculateur 60. Le calculateur 60 peut être configuré pour transmettre au ou aux moteurs 30 un signal de commande pour retranscrire l'ordre reçu. Le calculateur 60 peut par ailleurs être configuré pour fermer ou couper une ligne d'alimentation électrique alimentant électriquement le ou les moteurs 30. Le calculateur 60 est configuré, par exemple, pour piloter le ou les moteurs électriques 30 dans un mode actif MODA d'un mode de fonctionnement normal et pour inhiber le ou les moteurs électriques 30 dans un mode inactif MODIA dudit mode de fonctionnement normal. Le calculateur 60 peut en outre mémoriser diverses configurations fournissant chacune au moins un ordre de commande en fonction d'un ordre de pilotage transmis par un contrôleur 600.

Selon une autre caractéristique, la servocommande 10 peut comporter un ou plusieurs senseurs de fonctionnement de vérin 70, coopérant avec la tige de puissance 21, l'arbre de vérin ou un moteur électrique 31.

Par exemple, un senseur de fonctionnement de vérin 70 comporte un capteur rotatif d'un moteur électrique 31, par exemple du type capteur optique ou connu sous l'acronyme « RVDT » et l'expression anglaise « Rotary Variable Differential Transformer ».

Par exemple, ce senseur de fonctionnement de vérin 70 est un senseur linéaire, éventuellement soit à effet hall ou soit connu sous l'acronyme « LVDT » et l'expression anglaise « Linear Variable Differential Transformer ». Le senseur de fonctionnement de vérin 70 peut comprendre une unité de traitement 72 et une tige de mesure 71 mobile par rapport à l'unité de traitement 72. L'unité de traitement 72 peut être fixée au corps 15 de la servocommande 10 et par exemple au corps de vérin 22. La tige de mesure 71 peut être solidaire de la tige de puissance 21.

Dès lors, chaque senseur de fonctionnement de vérin 70 est relié par une liaison filaire ou non filaire au calculateur 60 pour lui transmettre un signal de fonctionnement de vérin. Le signal de fonctionnement de vérin est porteur d'une information de la position et donc du mouvement de translation soit de la tige de puissance 21 par rapport au corps 15 de la servocommande 10 selon l'axe longitudinal soit de l'arbre de vérin ou de la partie tournante 31 d'un moteur électrique.

Selon une autre caractéristique, le vérin électrique 20 peut comporter au moins un frein de vérin 55 pour freiner la tige de puissance 21 ou l'arbre de vérin 27 par rapport au corps 15 de la servocommande 10. Les figures illustrent un unique frein de vérin mais il est possible d'agencer plusieurs freins de vérin par sécurité.

Par exemple, le frein de vérin 55 comporte un patin 551 mobile en translation par rapport à un épaulement 270 de l'arbre de vérin 27, par exemple selon l'axe longitudinal, et un électroaimant 552 solidaire du corps de vérin commandé par le calculateur 60. Lorsque l'électroaimant 552 n'est plus alimenté électriquement, le patin 551 est plaqué par un ressort 553 contre l'épaulement 270 de l'arbre de vérin 27. Par exemple, le calculateur 60 pilote un contacteur alimentant électriquement l'électroaimant 552.

Indépendamment de la nature du vérin électrique 20 de la servocommande 10, la servocommande 10 comprend un ancrage 40 solidaire du vérin électrique 20.

L'ancrage 40 comprend une tige d'ancrage 42 mobile en translation, en l'absence de freinage, par rapport au corps 15 de la servocommande 10. La tige d'ancrage 42 peut comprendre une attache 420 pour être articulée soit à un support lorsque le vérin électrique 20 est articulé à un objet à déplacer soit à l'objet lorsque le vérin électrique 20 est articulé au support.

Pour immobiliser la tige d'ancrage 21 par rapport au corps 15 de la servocommande 10, l'ancrage 40 comprend au moins un frein d'ancrage 50 commandé par le calculateur 60. Les figures illustrent un unique frein d'ancrage mais il est possible d'agencer plusieurs freins d'ancrage par sécurité. Le frein d'ancrage 50 est configuré pour immobiliser, sur commande du calculateur 60, la tige d'ancrage 42 par rapport au vérin électrique 20 dans un mode de fonctionnement normal MODA, MODIA de la servocommande 10 ou autoriser le déplacement du vérin électrique 20 par rapport à la tige d'ancrage 42 dans un mode de fonctionnement sécurisé MODS.

Par exemple, le frein d'ancrage 50 est un frein électromécanique et le calculateur 60 pilote un contacteur alimentant électriquement le frein d'ancrage 50.

La figure 1 illustre un frein d'ancrage 50 au sein d'un dispositif rotatif.

Dès lors, l'ancrage 40 peut comporter un arbre d'ancrage 43 mobile en rotation par rapport à un portant 45 solidaire du vérin électrique 20.

Par exemple, le portant 45 comporte un corps d'ancrage 41 faisant partie du corps 15 de la servocommande 10. Le corps d'ancrage 41 et le corps de vérin 22 peuvent former une seule et même pièce, par exemple cylindrique. Un roulement 450 à billes ou autres peut être interposé entre le corps d'ancrage 41 et l'arbre d'ancrage 43, par exemple entre un épaulement 410 du corps d'ancrage 41 et l'arbre d'ancrage 43.

L'ancrage 40 peut comporter un convertisseur d'ancrage 44 relié à l'arbre d'ancrage 43 et à la tige d'ancrage 42. Un mouvement translatif de l'arbre d'ancrage 43 par rapport à la tige d'ancrage 42 suivant l'axe longitudinal induit alors un mouvement rotatif de cet arbre d'ancrage 43 par rapport à la tige d'ancrage 42 autour de l'axe longitudinal. Le convertisseur d'ancrage 44 peut comprendre une vis à billes ou un équivalent portée par l'arbre d'ancrage par exemple. A cet effet, l'arbre d'ancrage 43 peut comporter un filetage coopérant avec le convertisseur d'ancrage 44 porté par la tige d'ancrage 42. Le convertisseur d'ancrage 44 peut comprendre une vis à billes ou un équivalent, un écrou voire peut comporter un système de réduction de vitesse.

L'arbre d'ancrage 43 peut s'étendre entièrement dans le corps d'ancrage 41, la tige d'ancrage 42 pouvant s'étendre en partie dans le corps d'ancrage 41. Alternativement, l'arbre d'ancrage 43 peut s'étendre partiellement dans le corps d'ancrage 41.

Par exemple, le frein d'ancrage 50 comporte un patin 52 mobile en translation suivant l'axe longitudinal par rapport à un épaulement 430 de l'arbre d'ancrage 43 ainsi qu'un électroaimant 51 commandé par le calculateur 60 et porté par le corps d'ancrage 41. Un ressort 53 peut s'étendre entre le patin 52 et un épaulement 410 du corps d'ancrage pour tendre à éloigner le patin 52 de l'arbre d'ancrage 43. Lorsque le calculateur 60 pilote une alimentation électrique de l'électroaimant, le patin 52 est plaqué contre l'épaulement 430 de l'arbre d'ancrage 43. Par exemple, le calculateur 60 pilote un contacteur alimentant électriquement le frein d'ancrage 50.

Dès lors, le frein d'ancrage 50 immobilise l'arbre d'ancrage 43 par rapport à la tige d'ancrage 42 et au vérin électrique 20 dans le mode de fonctionnement normal MODA, MODIA et libère l'arbre d'ancrage 43 dans le mode de fonctionnement sécurisé MODS.

La figure 2 illustre une autre réalisation, l'ancrage 40 comporte un arbre d'ancrage 43 solidaire du vérin électrique 20 et mobile en translation suivant l'axe longitudinal par rapport à la tige d'ancrage 42. Dès lors, le frein d'ancrage 50 lie l'arbre d'ancrage 43 et ladite tige d'ancrage 42 dans le mode de fonctionnement normal MODA, MODIA et désolidarise l'arbre d'ancrage 43 et la tige d'ancrage 42 dans le mode de fonctionnement sécurisé MODS.

Par exemple, le frein d'ancrage 50 comporte un doigt 54 pénétrant dans un orifice de l'arbre d'ancrage 43 et dans un orifice de la tige d'ancrage 42. Le frein d'ancrage 50 peut en outre comprendre un actionneur 55 commandé par le calculateur 60 et apte à déplacer le doigt 54 en dehors de l'orifice de la tige d'ancrage 42.

Indépendamment de la variante et en référence à la figure 1, la servocommande 10 peut comporter au moins un senseur de fonctionnement d'ancrage 73 coopérant avec la tige d'ancrage 42 et/ou l'arbre d'ancrage 43.

Par exemple, un senseur de fonctionnement d'ancrage 73 est un capteur rotatif mesurant une position de l'arbre d'ancrage.

Par exemple, un senseur de fonctionnement d'ancrage 73 est un senseur linéaire. Le senseur de fonctionnement d'ancrage 73 peut comprendre une unité de mesure 75 et une barre de mesure 74 mobile en translation selon l'axe longitudinal par rapport à l'unité de mesure 75. L'unité de mesure 75 peut être fixée au corps 15 de la servocommande 10, et par exemple au corps de vérin 22 selon la figure 1, ou à l'arbre d'ancrage 43 selon la figure 2. La barre de mesure 74 peut être solidaire de la tige d'ancrage 42.

Dès lors, le senseur de fonctionnement d'ancrage 73 est relié par une liaison filaire ou non filaire au calculateur 60 pour lui transmettre un signal de fonctionnement de vérin porteur d'une information de la position et donc du mouvement de la tige d'ancrage 42 par rapport au corps 15 de la servocommande 10.

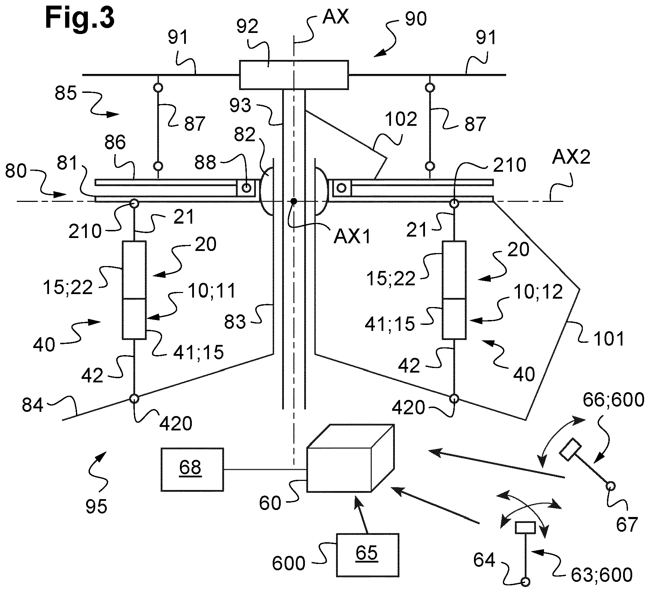

La figure 3 présente un véhicule muni d'au moins une servocommande 10 selon l'invention.

En particulier, ce véhicule est un giravion 95 pourvu d'un rotor 90 comprenant plusieurs pales 91 portées par un moyeu 92. Le rotor 90 peut être mis en rotation autour d'un axe de rotation AX par un mât rotor 93 relié au moyeu 92, le mât rotor 93 étant mis en mouvement par une installation motrice non représentée par commodité. Pour modifier le pas des pales 91, le giravion 95 comprend un système 80 à plateau cyclique.

Le système 80 comporte un plateau oscillant 81 relié par un mécanisme 85 à chaque pale 91. Par exemple, le plateau oscillant 81 est disposé sur une rotule 82 mobile en translation selon l'axe de rotation AX sur un tube de guidage 83. Le plateau oscillant 81 peut ainsi être mis en translation selon l'axe de rotation AX conjointement avec la rotule 82 et peut effectuer deux rotations autour de deux axes AX1, AX2 orthogonaux à l'axe de rotation AX.

Le plateau oscillant 81 peut être un plateau non tournant autour de l'axe de rotation AX. A cet effet, le plateau oscillant 81 peut être articulé à un compas non tournant 101 attaché au tube de guidage 83 ou à un support 84 éventuellement solidaire du tube de guidage 83.

Le mécanisme 85 peut comprendre un plateau tournant 86 ayant uniquement un degré de liberté en rotation par rapport au plateau oscillant 81. Par exemple, le plateau tournant 86 est porté par le plateau oscillant 81, un système de roulement 88 étant interposé entre le plateau tournant 86 et le plateau oscillant 81. Le plateau tournant 86 peut être articulé à un compas tournant 102, le compas tournant 102 étant articulé au mât rotor 93 ou au moyeu 92 par exemple. En outre, le système 80 comporte une biellette de pas 87 par pale 91, chaque biellette de pas 87 étant articulée à une pale 91 et au plateau tournant 86.

Ce système 80 à plateau cyclique est équipé d'au moins quatre servocommandes 10 électromécaniques, et uniquement de quatre servocommandes 11-14 par exemple.

La référence 10 désigne n'importe quelle servocommande, les références 11-14 désignant des servocommandes particulières.

Chaque servocommande 10 est alors articulée au plateau oscillant 81 et au support 84, respectivement via le vérin électrique 20 et l'ancrage 40 selon la figure 3 ou respectivement via l'ancrage 40 et le vérin électrique 20 selon un exemple non illustré pour ne pas multiplier les figures. Les servocommandes 10 sont pilotées par un même calculateur 60.

Le giravion 95 peut comprendre au moins un contrôleur 600 transmettant un signal de pilotage au calculateur 60 pour étendre ou rétracter au moins une des servocommandes 11-14.

Par exemple, un tel contrôleur 600 peut comporter un pilote automatique 65 ou une interface manoeuvrable par un pilote humain.

Une telle interface peut comporter un levier 66 mobile en rotation autour d'un unique axe pour commander une variation collective du pas des pales 91. Dès lors, un senseur d'interface 67 peut transmettre un signal de pilotage au calculateur 60 porteur d'une position du levier 66. A titre illustratif le senseur d'interface 67 peut comprendre un potentiomètre.

Le terme « signal » désigne aussi bien un signal numérique qu'analogique, électrique ou optique par exemple.

Par exemple, une telle interface peut comporter un manche 63 mobile en rotation autour de deux axes pour commander une variation cyclique du pas des pales 91. Dès lors, un capteur d'interface 64 peut transmettre un signal de pilotage au calculateur 60 porteur d'une position du manche 63. A titre illustratif, le capteur d'interface 64 peut comprendre deux potentiomètres.

Selon un autre aspect, le calculateur 60 peut communiquer avec un alerteur 68 pour générer si nécessaire une alerte, sonore, visuelle ou tactile.

Par ailleurs, chaque servocommande 10 peut être soit dans le mode actif MODA ou le mode inactif MODIA du mode de fonctionnent normal ou dans le mode de fonctionnement sécurisé MODS. Ainsi, le système 80 peut se trouver dans diverses configurations, dépendants d'un mode de fonctionnement courant de chaque servocommande 10. Chaque configuration est associée à un mode de fonctionnement particulier de chaque servocommande 10. Par exemple, une configuration correspond à un état dans lequel toutes les servocommandes 11-14 sont dans le mode actif MODA, une autre configuration correspond à un état dans lequel la première servocommande 11 est dans le mode inactif MODIA et les autres servocommandes 12-14 sont dans le mode actif MODA, une autre configuration correspond à un état dans lequel la première servocommande 11 est dans le mode de fonctionnement sécurisé MODS et les autres servocommandes 12-14 sont dans le mode actif MODA... Par suite, le calculateur 60 mémorise un modèle de pilotage par configuration possible, chaque modèle de pilotage indiquant comment piloter chaque servocommande 10 en fonction du signal de pilotage reçu.

Chaque modèle peut par exemple comprendre une ou plusieurs équations, une matrice ou autres déterminant de manière usuelle un signal de commande à transmettre à une servocommande 10 en fonction du signal de pilotage reçu.

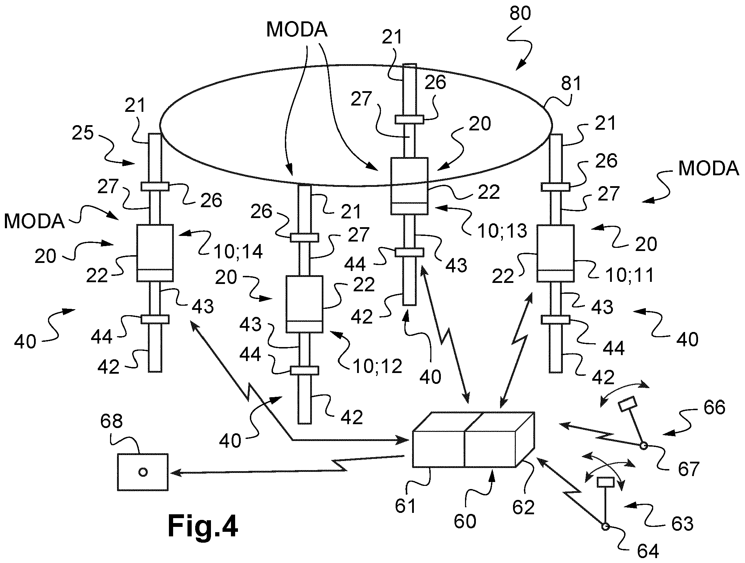

Les figures 4 à 6 illustrent un exemple de fonctionnement d'un système selon l'invention.

En référence à la figure 4, au moins trois servocommandes 12, 13, 14 sont dans le mode actif MODA du mode de fonctionnement normal. Les tiges d'ancrage de ces trois servocommandes 12, 13, 14 sont immobiles par rapport au vérin électrique 20 respectif. Le calculateur 60 applique un premier modèle et transmet un signal de commande à au moins un moteur électrique 30 de ces trois servocommandes 12, 13, 14 pour les étendre, les rétracter ou les maintenir à une longueur donnée en fonction d'un signal transmis par une des interfaces ou par le pilote automatique.

Eventuellement, toutes les servocommandes 11-14 sont dans le mode actif MODA du mode de fonctionnement normal, ou au moins une servocommande 11-14 est dans le mode inactif MODIA du mode de fonctionnement normal. Selon l'exemple illustré, la servocommande 11 est dans ce mode inactif MODIA, la tige de puissance 21 de cette servocommande 11 étant libre en translation selon l'axe longitudinal par rapport au corps 15 de la servocommande 11. A cet effet, le ou les parties tournantes du ou des moteurs sont laissées libres en rotation par rapport à le ou les stators.

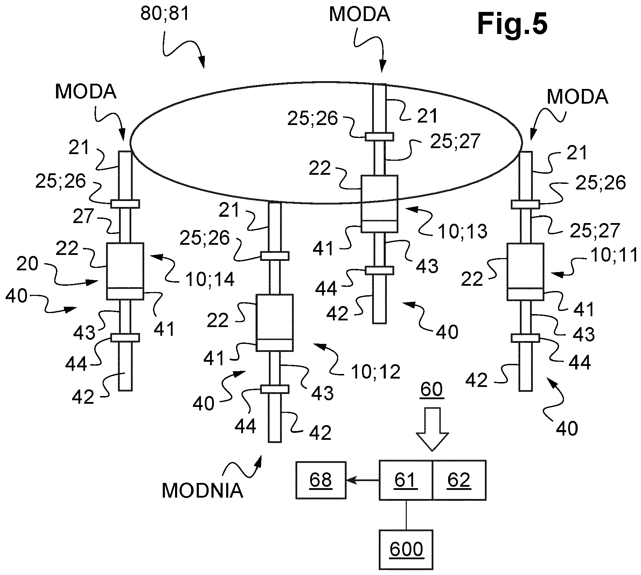

En référence à la figure 5, le moteur électrique 30 d'une des servocommandes 11-14 dans le mode actif peut dysfonctionner, la servocommande 12 étant en panne selon l'exemple. Le calculateur 60 peut détecter une telle panne aisément. Si le senseur de fonctionnement de vérin 70 de cette servocommande 12 transmet un signal de mesure au calculateur 60 indiquant que le senseur de fonctionnement de vérin 70 se rétracte ou s'étend d'une manière qui ne correspond pas à l'ordre donné, alors le calculateur 60 peut en déduire la présence d'un dysfonctionnement. Un tel dysfonctionnement peut résulter d'un grippage mécanique ou d'une panne d'un moteur électrique 30 par exemple.

Le calculateur 60 peut transmettre un signal d'alerte à un alerteur 68 pour générer une alarme de dysfonctionnement.

En l'absence de grippage mécanique du vérin électrique 20, la tige de puissance 21 de la servocommande 12 est alors mobile par rapport au ou aux moteurs électriques 30 de cette servocommande 12. Le cas échéant, le convertisseur de vérin 26 autorise une translation selon l'axe longitudinal de la tige de puissance 21 par rapport à l'arbre de vérin 27.

Le calculateur 60 peut alors passer la servocommande 12 en panne dans le mode inactif MODIA du mode de fonctionnement normal, par exemple en ouvrant un contacteur alimentant électriquement le ou les moteurs électriques 30 de cette servocommande 12. De plus, le calculateur 60 change de modèle de fonctionnement et pilote la servocommande 11 qui passe du mode inactif MODIA au mode actif MODA.

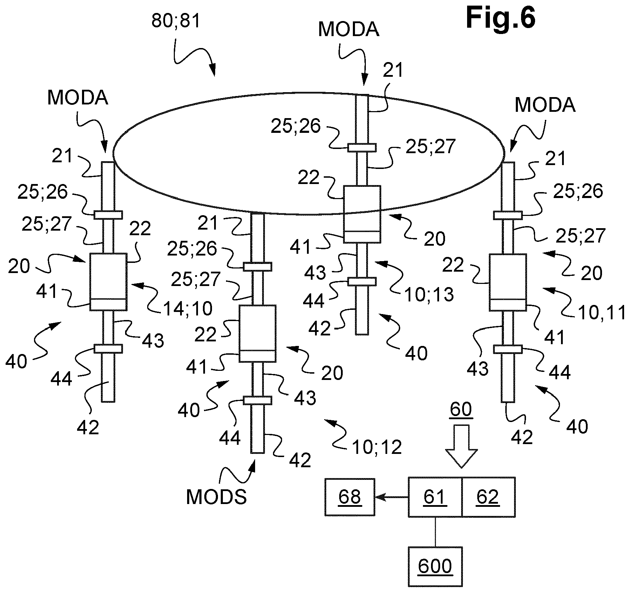

En référence à la figure 6, si le calculateur 60 détecte un grippage de la servocommande 12, le calculateur 60 pilote le frein d'ancrage de cette servocommande 12 pour désolidariser le vérin électrique 20 de la tige d'ancrage 42. Si le senseur de fonctionnement de vérin 70 transmet un signal de mesure au calculateur 60 indiquant que le senseur de fonctionnement de vérin 70 ne se rétracte pas ou ne s'étend pas alors que le calculateur 60 pilote les autres servocommandes 11, 13-14 pour déplacer le plateau oscillant 81, le calculateur 60 peut en déduire que la servocommande est grippée.

Dès lors, la servocommande 12 grippée suit les mouvements du plateau oscillant 81 et le vol peut se poursuivre normalement.

Le calculateur 60 peut transmettre un signal d'alerte à un alerteur 68 pour générer une alarme de grippage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Servocommande (10) linéaire électromécanique comportant une tige de puissance (21) mobile en translation, ladite servocommande (10) comporte un unique vérin électrique (20) linéaire muni d'au moins un moteur électrique (30) relié par une liaison mécanique (25) à la tige de puissance (21), la servocommande (10) comprenant un ancrage (40) solidaire du vérin électrique (20), ledit au moins un moteur électrique (30) étant commandé par un calculateur (60), **caractérisée en ce que** ledit ancrage (40) ayant une tige d'ancrage (42) mobile en translation par rapport à un corps (15) de la servocommande (10), ledit ancrage (40) ayant au moins un frein d'ancrage (50) qui est configuré pour immobiliser la tige d'ancrage (42) par rapport au vérin électrique (20) dans un mode de fonctionnement normal (MODA, MODIA) et rendre transparente la servocommande en autorisant le déplacement du vérin électrique (20) par rapport à la tige d'ancrage (42) dans un mode de fonctionnement sécurisé (MODS) sur requête du calculateur (60).

2. Servocommande selon la revendication 1,
**caractérisée en ce que** ledit vérin électrique (20) comporte plusieurs moteurs électriques (30) coopérant avec un même arbre de vérin (27) de la liaison mécanique (25).

3. Servocommande selon l'une quelconque des revendications 1 à 2,
**caractérisée en ce que** ladite liaison mécanique (25) comporte un arbre de vérin (27) solidaire d'une partie tournante (31) dudit au moins un moteur électrique (30), ladite liaison mécanique (25) comportant un convertisseur de vérin (26) relié audit arbre de vérin (27) et à ladite tige de puissance (21) et configuré pour convertir un mouvement rotatif de l'arbre de vérin (27) en un mouvement translatif de ladite tige de puissance (21) et inversement.

4. Servocommande selon la revendication 3,
**caractérisée en ce que** ledit arbre de vérin (27) comporte un filetage (28) coopérant avec le convertisseur de vérin (26).

5. Servocommande selon l'une quelconque des revendications 1 à 4,
**caractérisée en ce que** ledit ancrage (40) comporte un arbre d'ancrage (43) mobile en rotation par rapport à un portant (45) solidaire du vérin électrique (20), ledit ancrage (40) comportant un convertisseur d'ancrage (44) réversible relié audit arbre d'ancrage (43) et à ladite tige d'ancrage (42) et configuré pour qu'un mouvement translatif de l'arbre d'ancrage (43) par rapport à la tige d'ancrage (42) induise un mouvement rotatif de l'arbre d'ancrage (43) et inversement, ledit frein d'ancrage (50) étant configuré pour immobiliser ledit arbre d'ancrage (43) par rapport à la tige d'ancrage dans le mode de fonctionnement normal (MODA, MODIA) et pour libérer ledit arbre d'ancrage (43) dans le mode de fonctionnement sécurisé (MODS).

6. Servocommande selon l'une quelconque des revendications 1 à 4,
**caractérisée en ce que** ledit ancrage (40) comporte un arbre d'ancrage (43) solidaire du vérin électrique (20) et mobile en translation par rapport à la tige d'ancrage (42), ledit frein d'ancrage (50) étant configuré pour lier ledit arbre d'ancrage (43) et ladite tige d'ancrage (42) dans le mode de fonctionnement normal (MODA, MODIA) et pour désolidariser ledit arbre d'ancrage (43) et ladite tige d'ancrage (42) dans le mode de fonctionnement sécurisé (MODS).

7. Servocommande selon l'une quelconque des revendications 1 à 6,
**caractérisée en ce que** ledit vérin électrique (20) comporte un frein de vérin (55) coopérant avec ladite tige de puissance (21) ou un arbre de vérin (27) lié à la tige de puissance (21) par un convertisseur de vérin (26).

8. Servocommande selon l'une quelconque des revendications 1 à 7,
**caractérisée en ce que**, ledit calculateur (60) est configuré pour piloter ledit au moins un moteur électrique (30) dans un mode actif (MODA) dudit mode de fonctionnement normal et pour inhiber ledit au moins un moteur électrique (30) dans un mode inactif (MODIA) dudit mode de fonctionnement normal.

9. Servocommande selon l'une quelconque des revendications 1 à 8,
**caractérisée en ce que** ladite servocommande (10) pouvant fonctionner selon plusieurs configurations, lesdites configurations dépendants d'un mode de fonctionnement courant de la servocommande (10), ledit mode de fonctionnement courant pouvant être un mode correspondant au mode de fonctionnement normal (MODA, MODIA) ou sécurisé (MODS), ledit calculateur (60) comporte un modèle de pilotage par configuration possible pour commander ladite servocommande (10) en fonction d'au moins un signal de pilotage reçu.

10. Servocommande selon l'une quelconque des revendications 1 à 9,
**caractérisée en ce que** ladite servocommande (10) comporte au moins un senseur de fonctionnement de vérin (70), ledit senseur de fonctionnement de vérin (70) transmettant au calculateur (60) un signal de fonctionnement de vérin porteur d'une information de mouvement de ladite tige de puissance (21) par rapport à un corps (15) de la servocommande (10).

11. Servocommande selon l'une quelconque des revendications 1 à 10,
**caractérisée en ce que** ladite servocommande (10) comporte au moins un senseur de fonctionnement d'ancrage (73), ledit senseur de fonctionnement d'ancrage (73) transmettant au calculateur (60) un signal de fonctionnement d'ancrage porteur d'une information de mouvement de ladite tige d'ancrage (42) par rapport à un corps (15) de la servocommande (10).

12. Système (80) à plateau cyclique ayant au moins quatre servocommandes (10) électromécaniques articulées chacune à un support (84) et à un plateau oscillant (81) de commande du pas de pales (91) d'un rotor (90),
**caractérisé en ce que** chaque servocommande (10) est selon l'une quelconque des revendications 1 à 11, lesdits moteurs électriques (30) desdites servocommandes (10) étant commandés par un calculateur (60) commun, ledit ancrage (40) de chaque servocommande (10) ayant une dite tige d'ancrage (42) articulée au support (84) ou au plateau oscillant (81).

13. Système selon la revendication 12,
**caractérisé en ce que** ledit système (80) pouvant fonctionner selon plusieurs configurations, lesdites configurations dépendants d'un mode de fonctionnement courant de chaque servocommande (10), ledit mode de fonctionnement courant pouvant être un mode du mode de fonctionnement normal (MODA, MODIA) ou sécurisé (MODS), ledit calculateur (60) comporte un modèle de pilotage par configuration possible pour commander lesdites servocommandes (10) en fonction d'au moins un signal de pilotage reçu.

14. Système selon l'une quelconque des revendications 12 à 13, **caractérisé en ce que** ledit système (80) comporte uniquement quatre dites servocommandes (10).

15. Giravion (95) muni d'un rotor (90) comprenant plusieurs pales (91), ledit giravion (95) comprenant un système (80) à plateau cyclique ayant au moins quatre servocommandes (10) électromécaniques articulées à un plateau oscillant (81) relié par un mécanisme (85) à chaque pale (91),
**caractérisé en ce que** ledit système (80) à plateau cyclique est selon l'une quelconque des revendications 12 à 14.

## Patentansprüche

1. Elektromechanische lineare Servosteuerung (10) mit einer translationsbeweglichen Kraftübertragungsstange (21),
wobei die Servosteuerung (10) ein einziges lineares elektrisches Stellglied (20) umfasst, das mit mindestens einem Elektromotor (30) versehen ist, der über eine mechanische Verbindung (25) mit der Kraftübertragungsstange (21) verbunden ist, wobei die Servosteuerung (10) eine Verankerung (40) umfasst, die fest mit dem elektrischen Stellglied (20) verbunden ist, und der mindestens eine Elektromotor (30) von einem Rechner (60) gesteuert ist,
**dadurch gekennzeichnet, dass** die Verankerung (40) eine Verankerungsstange (42) aufweist, die in Bezug auf einen Körper (15) der Servosteuerung (10) translationsbeweglich ist, wobei die Verankerung (40) mindestens eine Verankerungsbremse (50) aufweist, die konfiguriert ist, um in einem normalen Betriebsmodus (MODA, MODIA) die Verankerungsstange (42) in Bezug auf das elektrische Stellglied (20) unbeweglich zu machen und in einem abgesicherten Betriebsmodus (MODS) die Servosteuerung transparent zu machen, indem sie die Bewegung des elektrischen Stellglieds (20) relativ zur Verankerungsstange (42) auf Anforderung des Rechners (60) zulässt.

2. Servosteuerung nach Anspruch 1,
**dadurch gekennzeichnet, dass** das elektrische Stellglied (20) mehrere Elektromotoren (30) aufweist, die mit derselben Stellgliedwelle (27) der mechanischen Verbindung (25) zusammenwirken.

3. Servosteuerung nach einem der Ansprüche 1 bis 2,
**dadurch gekennzeichnet, dass** die mechanische Verbindung (25) eine Stellgliedwelle (27) umfasst, die fest mit einem rotierenden Teil (31) des mindestens einen Elektromotors (30) verbunden ist, wobei die mechanische Verbindung (25) einen Stellgliedwandler (26) umfasst, der mit der Stellgliedwelle (27) und der Kraftübertragungsstange (21) verbunden und konfiguriert ist, um eine Drehbewegung der Stellgliedwelle (27) in eine Translationsbewegung der Kraftübertragungsstange (21) und umgekehrt umzuwandeln.

4. Servosteuerung nach Anspruch 3,
**dadurch gekennzeichnet, dass** die Stellgliedwelle (27) ein Gewinde (28) aufweist, das mit dem Stellgliedwandler (26) zusammenwirkt.

5. Servosteuerung nach einem der Ansprüche 1 bis 4,
**dadurch gekennzeichnet, dass** die Verankerung (40) eine Verankerungswelle (43) umfasst, die in Bezug auf einen fest mit dem elektrischen Stellglied (20) verbundenen Träger (45) drehbeweglich ist, dass die Verankerung (40) einen reversierbaren Verankerungswandler (44) umfasst, der mit der Verankerungswelle (43) und der Verankerungsstange (42) verbunden und so konfiguriert ist, dass eine Translationsbewegung der Verankerungswelle (43) in Bezug auf die Verankerungsstange (42) eine Drehbewegung der Verankerungswelle (43) induziert und umgekehrt, wobei die Verankerungsbremse (50) konfiguriert ist, um die Verankerungswelle (43) in der normalen Betriebsart (MODA, MODIA) relativ zur Verankerungsstange zu fixieren und die Verankerungswelle (43) in der sicheren Betriebsart (MODS) freizugeben.

6. Servosteuerung nach einem der Ansprüche 1 bis 4,
**dadurch gekennzeichnet, dass** die Verankerung (40) eine Verankerungswelle (43) umfasst, die fest mit dem elektrischen Stellglied (20) verbunden und in Bezug auf die Verankerungsstange (42) translationsbeweglich ist, wobei die Verankerungsbremse (50) konfiguriert ist, um in der normalen Betriebsart (MODA, MODIA) die Verankerungswelle (43) und die Verankerungsstange (42) zu verbinden und in der gesicherten Betriebsart (MODS) die Verankerungswelle (43) und die Verankerungsstange (42) zu trennen.

7. Servosteuerung nach einem der Ansprüche 1 bis 6,
**dadurch gekennzeichnet, dass** das elektrische Stellglied (20) eine Stellgliedbremse (55), die mit der Kraftübertragungsstange (21) zusammenwirkt, oder eine Stellgliedwelle (27) aufweist, die über einen Stellgliedwandler (26) mit der Kraftübertragungsstange (21) verbunden ist.

8. Servosteuerung nach einem der Ansprüche 1 bis 7,
**dadurch gekennzeichnet, dass** der Rechner (60) konfiguriert ist, um in einem aktiven Modus (MODA) des normalen Betriebsmodus den mindestens einen Elektromotor (30) anzusteuern und in einem inaktiven Modus (MODIA) des normalen Betriebsmodus den mindestens einen Elektromotor (30) zu hemmen.

9. Servosteuerung nach einem der Ansprüche 1 bis 8,
**dadurch gekennzeichnet, dass** die Servosteuerung (10) in mehreren Konfigurationen betreibbar ist, wobei die Konfigurationen von einem aktuellen Betriebsmodus der Servosteuerung (10) abhängen, wobei der aktuelle Betriebsmodus ein Modus sein kann, der dem normalen (MODA, MODIA) oder dem abgesicherten (MODS) Betriebsmodus entspricht, wobei der Rechner (60) pro möglicher Konfiguration ein Treibermodell zum Steuern der Servosteuerung (10) in Abhängigkeit von mindestens einem empfangenen Treibersignal aufweist.

10. Servosteuerung nach einem der Ansprüche 1 bis 9,
**dadurch gekennzeichnet, dass** die Servosteuerung (10) mindestens einen Stellgliedbetriebssensor (70) umfasst, wobei der Stellgliedbetriebssensor (70) ein Stellgliedbetriebssignal an den Rechner (60) überträgt, das Träger einer Information über die Bewegung der Kraftübertragungsstange (21) in Bezug auf einen Körper (15) der Servosteuerung (10) ist.

11. Servosteuerung nach einem der Ansprüche 1 bis 10,
**dadurch gekennzeichnet, dass** die Servosteuerung (10) mindestens einen Verankerungsbetriebssensor (73) umfasst, wobei der Verankerungsbetriebssensor (73) an den Rechner (60) ein Verankerungsbetriebssignal überträgt, das Träger einer Information über die Bewegung der Verankerungsstange (42) in Bezug auf einen Körper (15) der Servosteuerung (10) ist.

12. Taumelscheibensystem (80) mit mindestens vier elektromechanischen Servosteuerungen (10), die jeweils an einem Träger (84) und an einer Taumelscheibe (81) zur Steuerung der Blattverstellung (91) eines Rotors (90) angelenkt sind,
**dadurch gekennzeichnet, dass** jede Servosteuerung (10) nach einem der Ansprüche 1 bis 11 ausgebildet ist, wobei die Elektromotoren (30) der Servosteuerungen (10) von einem gemeinsamen Rechner (60) gesteuert sind, und die Verankerung (40) jeder Servosteuerung (10) eine besagte Verankerungsstange (42) aufweist, die gelenkig mit dem Träger (84) oder der Taumelscheibe (81) verbunden ist.

13. System nach Anspruch 12,
**dadurch gekennzeichnet, dass** das System (80) in mehreren Konfigurationen betreibbar ist, wobei die Konfigurationen von einem aktuellen Betriebsmodus jeder Servosteuerung (10) abhängen, wobei der aktuelle Betriebsmodus ein Modus des normalen (MODA, MODIA) oder des abgesicherten (MODS) Betriebsmodus sein kann, wobei der Rechner (60) ein Treibermodell pro möglicher Konfiguration enthält, um die Servosteuerungen (10) in Abhängigkeit von mindestens einem empfangenen Treibersignal zu steuern.

14. System nach einem der Ansprüche 12 bis 13,
**dadurch gekennzeichnet, dass** das System (80) genau vier der Servosteuerungen (10) umfasst.

15. Drehflügelflugzeug (95) mit einem mehrere Blätter (91) umfassenden Rotor (90), wobei das Drehflügelflugzeug (95) ein Taumelscheibensystem (80) mit mindestens vier elektromechanischen Servosteuerungen (10) umfasst, die an einer Taumelscheibe (81) angelenkt sind, die über einen Mechanismus (85) mit jedem Blatt (91) verbunden ist,
**dadurch gekennzeichnet, dass** das Taumelscheibensystem (80) nach einem der Ansprüche 12 bis 14 ausgebildet ist.

## Claims

1. Linear electromechanical servocontrol (10) comprising a translationally movable power rod (21),
said servocontrol (10) comprises a single linear electric jack (20) provided with at least one electric motor (30) connected by a mechanical link (25) to the power rod (21), the servocontrol (10) comprising an anchor (40) rigidly connected to the electric jack (20), said at least one electric motor (30) being controlled by a computer (60),
**characterised in that** said anchor (40) has an anchor rod (42) that is translationally movable relative to a body (15) of the servocontrol (10), said anchor (40) having at least one anchor brake (50) that is configured to immobilise the anchor rod (42) relative to the electric jack (20) in a normal operating mode (MODA, MODIA) and to allow free movement of the servocontrol by allowing the electric jack (20) to move relative to the anchor rod (42) in a safe operating mode (MODS) at the request of the computer (60).

2. Servocontrol according to Claim 1,
**characterised in that** said electric jack (20) comprises a plurality of electric motors (30) engaging with the same jack shaft (27) of the mechanical link (25).

3. Servocontrol according to any one of Claims 1 to 2,
**characterised in that** said mechanical link (25) comprises a jack shaft (27) rigidly connected to a rotating part (31) of said at least one electric motor (30), said mechanical link (25) comprising a jack converter (26) connected to said jack shaft (27) and to said power rod (21) and configured to convert a rotational movement of the jack shaft (27) into a translational movement of the power rod (21), and vice versa.

4. Servocontrol according to Claim 3,
**characterised in that** said jack shaft (27) comprises a thread (28) engaging with the jack converter (26).

5. Servocontrol according to any one of Claims 1 to 4,
**characterised in that** said anchor (40) comprises an anchor shaft (43) that is translationally movable relative to a brace (45) rigidly connected to the electric jack (20), said anchor (40) comprising a reversible anchor converter (44) connected to said anchor shaft (43) and to said anchor rod (42) and configured so that a translational movement of the anchor shaft (43) relative to the anchor rod (42) causes a rotational movement of the anchor shaft (43), and vice versa, said anchor brake (50) being configured to immobilise said anchor shaft (43) relative to the anchor rod in the normal operating mode (MODA, MODIA) and to release said anchor shaft (43) in the safe operating mode (MODS).

6. Servocontrol according to any one of Claims 1 to 4,
**characterised in that** said anchor (40) comprises an anchor shaft (43) rigidly connected to the electric jack (20) and translationally movable relative to the anchor rod (42), said anchor brake (50) being configured to connect said anchor shaft (43) and said anchor rod (42) in the normal operating mode (MODA, MODIA) and to disengage said anchor shaft (43) and said anchor rod (42) in the safe operating mode (MODS).

7. Servocontrol according to any one of Claims 1 to 6,
**characterised in that** said electric jack (20) comprises a jack brake (55) engaging with said power rod (21) or a jack shaft (27) connected to the power rod (21) by a jack converter (26).

8. Servocontrol according to any one of Claims 1 to 7,
**characterised in that** said computer (60) is configured to control said at least one electric motor (30) in an active mode (MODA) of said normal operating mode and to inhibit said at least one electric motor (30) in an inactive mode (MODIA) of said normal operating mode.

9. Servocontrol according to any one of Claims 1 to 8,
**characterised in that** said servocontrol (10) is able to operate in several configurations, with said configurations depending on a current operating mode of the servocontrol (10), said current operating mode being able to be a mode corresponding to the normal (MODA, MODIA) or safe (MODS) operating mode, said computer (60) comprises one control model per possible configuration for controlling said servocontrol (10) as a function of at least one received control signal.

10. Servocontrol according to any one of Claims 1 to 9,
**characterised in that** said servocontrol (10) comprises at least one jack operation sensor (70), with said jack operation sensor (70) transmitting a jack operation signal to the computer (60) conveying information relating to the movement of said power rod (21) relative to a body (15) of the servocontrol (10).

11. Servocontrol according to any one of Claims 1 to 10,
**characterised in that** said servocontrol (10) comprises at least one anchor operation sensor (73), with said anchor operation sensor (73) transmitting an anchor operation signal to the computer (60) conveying information relating to the movement of said anchor rod (42) relative to a body (15) of the servocontrol (10).

12. Swashplate system (80) having at least four electromechanical servocontrols (10) each hinged to a support (84) and to an oscillating swashplate (81) for controlling the pitch of blades (91) of a rotor (90),
**characterised in that** each servocontrol (10) is a servocontrol according to any one of Claims 1 to 11, said electric motors (30) of said servocontrols (10) being controlled by a common computer (60), said anchor (40) of each servocontrol (10) having one of said anchor rods (42) hinged to the support (84) or to the oscillating swashplate (81).

13. System according to Claim 12,
**characterised in that** said system (80) is able to operate in several configurations, with said configurations depending on a current operating mode of each servocontrol (10), said current operating mode being able to be a normal (MODA, MODIA) or a safe (MODS) operating mode, said computer (60) comprises one control model per possible configuration for controlling said servocontrols (10) as a function of at least one received control signal.

14. System according to any one of Claims 12 to 13,
**characterised in that** said system (80) comprises only four of said servocontrols (10).

15. Rotorcraft (95) provided with a rotor (90) comprising a plurality of blades (91), said rotorcraft (95) comprising a swashplate system (80) having at least four electromechanical servocontrols (10) hinged to an oscillating swashplate (81) connected by a mechanism (85) to each blade (91),
**characterised in that** said swashplate system (80) is a system according to any one of Claims 12 to 14.
